# EUROPÄISCHE PATENTSCHRIFT

(11) **EP 0 883 559 B1**
(45) Veröffentlichungstag und Bekanntmachung des Hinweises auf die Patenterteilung: **24.11.1999**
(21) Anmeldenummer: 97915272.5
(22) Anmeldetag: 01.02.1997
(51) Int. Cl.: B65G 7/02

(54) **TRANSPORTMODUL ZUM BEWEGEN SCHWERER LASTEN**
TRANSPORT MODULE FOR THE MOVING OF HEAVY LOADS
MODULE DE TRANSPORT POUR DEPLACER DES CHARGES IMPORTANTES

(30) Priorität: 08.02.1996 DE 19604513
(43) Veröffentlichungstag der Anmeldung: 16.12.1998
(73) Patentinhaber: Mannesmann Rexroth AG, 97816 Lohr am Main (DE)
(72) Erfinder: CLAASSEN, Josephus, Antonius, Maria, NL-5629 GV Eindhoven (NL); DRENTH, Berend, Wilco, NL-5221 AX 's-Hertogenbosch (NL); FLUKS, Marten, NL-4133 BL Vianen (NL)
(86) Internationale Anmeldenummer: DE9700201
(87) Internationale Veröffentlichungsnummer: WO9729032

(56) Entgegenhaltungen:
- US-A- 2 785 761
- US-A- 5 096 009

## Beschreibung

Die Erfindung betrifft ein Transportmodul, mit dem schwere Lasten über einen Boden bewegt werden können und das die Merkmale aus dem Oberbegriff des Anspruchs 1 aufweist.

Für den horizontalen Transport von großen, schweren Lasten sind verschiedene Systeme bekannt und in Gebrauch. Verwendete Prinzipien sind zum Beispiel:
a) Verschieben der schweren Last auf Gleitflächen, mit denen die Abstützungen der schweren Last versehen sind;
b) Fahren auf Rädern mit Hilfe von Transportwagen, die Reifen oder auf Gleisen rollende Stahlräder aufweisen;
c) Verschieben einer Last, die unter Benutzung von pneumostatischen oder hydrostatischen Lagern schwebt;
d) Laufen, bei dem die Last sowohl angehoben als auch horizontal transportiert wird.

Die horizontale Lastbewegung kann in den Fällen b) und c) kontinuierlich stattfinden. Im Fall a) ist sie meistens diskontinuierlich. Im Fall d) ist die Bewegung prinzipiell diskontinuierlich. Die bekannten Lösungen für den horizontalen Transport von großen, schweren Lasten haben jeweils bestimmte Nachteile. Zum Beispiel sind beim Verschieben auf Gleitflächen große Antriebskräfte notwendig. Der Energieverbrauch ist insbesondere beim Verschieben auf Gleitflächen oder einem Kissen und beim Laufen relativ groß. Die Vorrichtungen sind aufwendig und teuer und stellen hohe Anforderungen an die Bodenbeschaffenheit.

Aus der US-A 50 96 009 ist ein Transportmodul mit den Merkmalen aus dem Oberbegriff des Anspruchs 1 bekannt. Bei diesem Transportmodul wird ein Paar schiefer Bahnen für die Bewegung der Last benutzt. Das Transportmodul besitzt als ein Hauptteil ein Gestell, auf das die Last auflegbar ist und das auf den Boden aufsetzbar ist. Als zweites Hauptteil besitzt das Transportmodul eine Stütze, die ebenfalls auf dem Boden aufsetzbar ist. Durch einen Aktuator, der Teil des Gestells oder der Stütze ist, kann die Bodenauflagekraft des Gestells unter Erhöhung der Bodenauflagekraft der Stütze bis unter das Eigengewicht verringert werden. Das Gestell und die Stütze weisen ein Paar schiefer Bahnen auf, über die das Gestell an der Stütze abstützbar ist. Durch den Aktuator kann nun die Normalkraft zwischen dem Gestell und dem Boden, also die Bodenauflagekraft des Gestells und damit die Reibungskraft zwischen Boden und Gestell soweit verringert werden, daß das Gestell und mit ihm die Last die schiefe Bahn der Stütze entlangfährt und dabei horizontal bewegt wird. Dabei wird das Gestell vom Aktuator relativ zur Stütze immer weiter angehoben. Durch die Geschwindigkeit, mit der das Gestell angehoben wird, kann man die Geschwindigkeit der Lastbewegung steuern. Das Gestell hebt dabei normalerweise nicht vom Boden ab, da die durch die schiefen Bahnen und das Gewicht des Gestells und der Last erzeugte horizontale Kraft schon vor dem Abheben des Gestells vom Boden die Reibungskraft zwischen Gestell und Boden überwindet. Der Energieverbrauch ist deshalb niedriger als bei einer Bewegungsart, bei der die Last vollständig vom Boden abgehoben wird. Er ist auch geringer als bei einer Bewegungsart, bei der die Normalkraft und demzufolge die Reibungskraft nicht verringert ist.

Bei dem bekannten Transportmodul wird, wenn das Gestell eine Endlage erreicht hat und der Aktuator entlastet ist, die Stütze auf dem Boden durch eine Feder einen Schritt weiter geschoben. Dies setzt eine bestimmte Beschaffenheit des Bodens voraus. Außerdem ist eine sehr starke Feder notwendig, wenn schwere Lasten bewegt werden sollen und die Stütze dementsprechend stabil gebaut ist.

Es ist also das der Erfindung zugrundeliegende Ziel, ein Transportmodul zu schaffen, das als selbständige Einheit einzeln oder zusammen mit anderen gleichartigen Modulen zum Bewegen einer schweren Last verwendbar ist, das ein Bewegen der Last mit einem relativ kleinen Energieverbrauch ermöglicht und das keine besonderen Anforderungen an den Boden stellt.

Dieses Ziel wird mit einem Transportmodul erreicht, das zusätzlich zu den Merkmalen a) bis d) auch die Merkmale e) und f) des Anspruchs 1 aufweist. Bei einem solchen Transportmodul kann durch den Aktuator nicht nur die Bodenauflagekraft des Gestells unter Erhöhung der Bodenauflagekraft der Stütze, sondern auch die Bodenauflagekraft der Stütze unter Erhöhung der Bodenauflagekraft des Gestells bis unter das Eigengewicht verringert werden. Das Gestell und die Stütze weisen ein zweites Paar schiefer Bahnen auf, über die die Stütze am Gestell abstützbar ist. Wenn mit dem Aktuator die Bodenauflagekraft der Stütze verringert wird, kann die Stütze jeweils dem Gestell nachfahren. Mit einem erfindungsgemäßen Transportmodul ist also eine schwere Last diskontinuierlich bewegbar.

Ein erfindungsgemäßer Transportmodul kann einzeln, vorzugsweise jedoch zusammen mit einem oder mehreren weiteren Transportmodulen zum Bewegen einer Last verwendet werden. Dabei werden die Aktuatoren der verschiedenen Transportmodule aufeinander abgestimmt angesteuert.

Vorteilhafte Ausgestaltungen eines erfindungsgemäßen Transportmoduls kann man den Unteransprüchen entnehmen.

Die Stütze kann das über ihr befindliche Gestell auf einfache Weise abstützen. Die Stütze dagegen hängt, wenn sie verfahren wird, am Gestell. Dazu ist gemäß Anspruch 2 vorgesehen, daß das Gestell sich an gegenüberliegenden Seiten der Stütze befindliche erste Führungselemente mit zweiten Führungselementen untergreift. An den ersten und zweiten Führungselementen befindet sich das zweite Paar schiefer Bahnen.

In dem Teilschritt der Bewegung, in dem die Last verfahren wird, muß das Gewicht der Last sowie zumindest ein Teil des Gewichts des Gestells von der Stütze abgestützt werden. Dies geschieht über das erste Paar schiefer Bahnen. Um die Belastung der Bauteile insbesondere im Hinblick auf die Flächenpressung nicht zu groß werden zu lassen, wird deshalb das erste Paar schiefer Bahnen vorteilhafterweise durch ein Paar von aufeinander gleitenden schiefen Flächen gebildet. In dem Teilschritt, in dem die Stütze dem Gestell nachgefahren wird, wird zumindest ein Teil des Gewichts der Stütze über das zweite Paar schiefer Bahnen in das Gestell und über dieses in den Boden eingeleitet. Die über das zweite Paar schiefer Bahnen übertragenen Kräfte sind also wesentlich geringer als die Kräfte, die über das erste Paar schiefer Bahnen übertragen werden. Vorteilhafterveise wird deshalb das zweite Paar schiefer Bahnen durch eine schiefe Fläche und durch darauf abrollende Wälzkörper gebildet. Die Stütze bewegt sich deshalb schon bei einer relativ geringen Entlastung des Bodens von der Stütze und der damit verbundenen Verringerung der Reibkraft zwischen ihr und dem Boden. Dabei genügen drei Rollen zur Aufhängung der Stütze am Gestell, wenn die Rollen gemäß Anspruch 6 oder gemäß Anspruch 7 angeordnet sind.

Weil der Boden unterhalb eines Transportmoduls uneben sein kann, ist gemäß Anspruch 9 in der Stütze oder im Gestell ein Universalgelenk vorhanden, das ein Verkippen des zugehörigen Führungsblocks mit den schiefen Bahnen gegenüber den übrigen Teilen des Gestells oder der Stütze und damit ein Ausgleich der Bodenunebenheiten ermöglicht.

Gemäß Anspruch 10 gehört der Aktuator zur Stütze, wobei mit ihm die relative vertikale Position eines die schiefen Bahnen der Stütze aufweisenden Führungsblocks zu einem Bodenabstützkörper der Stütze veränderbar ist. Die Zuordnung des Aktuators zur Stütze hat den Vorteil, daß die Führungsblöcke und die schiefen Bahnen von Stütze und Gestell relativ weit vom Boden entfernt sein können. Je größer der Abstand zwischen den Führungsblöcken mit den schiefen Bahnen vom Boden ist, desto besser sind sie vor Verschmutzung geschützt.

Der Aktuator ist vorteilhafterveise gemäß Anspruch 11 derart angeordnet, daß seine Verstellbewegung wenigstens annähernd rein vertikal zum Boden erfolgt. Somit wird durch eine Verstellung des Aktuators allein keine horizontale Bewegung des Gestells oder der Stütze erzeugt, die sich der Bewegung über die schiefen Bahnen überlagern würde. Der Aktuator wird bevorzugt durch eine doppeltwirkende hydraulische Kolben-Zylindereinheit gebildet, da schon mit verhältnismäßig kleinen hydraulischen Antriebskomponenten große Kräfte erzeugt werden können. Der Einsatz einer hydraulischen Kolben-Zylindereinheit als Aktuator ermöglicht also eine kompakte Bauweise des Transportmoduls.

Durch eine Ausbildung des Transportmoduls gemäß Anspruch 14 wird es über das geradlinige Verfahren einer schweren Last hinaus auch ermöglicht, die schwere Last parallel zu verschieben. Die Last kann also unter Beibehaltung ihrer Ausrichtung in einer Ebene bewegt werden. Dies wird dadurch erreicht, daß ein erster Führungsblock des Gestells mit dessen schiefen Bahnen und ein zweiter Führungsblock der Stütze mit deren schiefen Bahnen relativ zu einem Bodenabstützkörper gemeinsam um eine vertikale Achse verdrehbar sind. Vorzugsweise sind die beiden Führungsblöcke in einem Winkelbereich von mindestens 270 Grad gegenüber dem Bodenabstützkörper des Gestells verdrehbar, so daß eine Last an jeden Punkt einer Ebene parallel verfahren kann.

Die Bewegungsmöglichkeiten für eine Last, die auf mehreren erfindungsgemäßen Transportmodulen aufliegt, werden dadurch noch erweitert, daß die Transportmodule gemäß Anspruch 17 ausgestaltet sind. Dann kann eine Last gedreht oder um eine Kurve verfahren, also die Ausrichtung einer Last verändert werden. Wesentlich für die Art der Bewegung ist es, daß zwischen den beiden Führungsblöcken des Gestells und der Stütze ein zeitliches Spiel besteht und daß Zentriermittel zur Zentrierung der Führungsblökke zueinander in einer neutralen Mittelstellung vorhanden sind. Das seitliche Spiel zwischen den beiden Führungsblöcken ermöglicht eine geringe Querverschiebung zwischen den beiden Führungsblöcken, die Zentriermittel sorgen dafür, daß bei Beginn eines Bewegungsschrittes beidseits gleicher Abstand zwischen den beiden Führungsblöcken vorhanden ist. Die Ausrichtung einer Last kann mit Transportmodulen gemäß Anspruch 17 auch dann geändert werden, wenn die beiden Führungsblöcke nicht gegen den Bodenabstützkörper des Gestells verdrehbar sind. Allerdings müssen dann die Transportmodule entsprechend ausgerichtet unter die Last gebracht werden. Auch kann die Mittelachse der Bewegung nicht ohne weiteres geändert werden. Bei einer Kurvenfahrt mit Änderung der Lastorientierung wird der Führungsblock des Gestells gegenüber der Stütze nicht nur in Querrichtung verschoben, sondern auch etwas verdreht. Es kann nun in der Stütze ein Drehgelenk vorhanden sein, damit der Führungsblock der Stütze die Verdrehung des Führungsblocks des Gestells mitmachen kann.

Es ist günstig, wenn gemäß Anspruch 22 die relative Bewegung zwischen Gestell und Stütze in Verfahrrichtung durch ein Weggeber erfaßbar ist. Dann können mehrere eine Last tragende Transportmodule bei einer Kurvenfahrt der Last genau gesteuert werden.

Gemäß Anspruch 24 ist ein die Auflagefläche für die Last aufweisendes Tragteil des Gestells höhenvertellbar. Dann kann ein Transportmodul bei abgesenktem Tragteil leicht unter eine durch sonstige Stützen getragene Last gebracht werden. Das Tragteil wird danach nach oben bewegt und die Last von den sonstigen Stützen freigehoben. Diese können dann entfernt werden. Umgekehrt läuft der Vorgang beim Absetzen der Last auf sonstige Stützen ab. Durch eine Ausbildung gemäß Anspruch 24 kann auch eine Senke oder eine Erhebung am Boden, über die ein von mehreren dieselbe Last tragenden Transportmodulen fährt, ausgeglichen werden. Auch in der Wahl der Abstützstellen an der Last, die nun unterschiedliche Höhenlagen haben können, ist man freier.

Gemäß Anspruch 25 ist das Tragteil vorzugsweise durch einen Hydraulikzylinder höhenverstellbar. Dabei kann durch Druckmessung leicht das Gewicht der Last bestimmt werden, wobei natürlich dafür gesorgt ist, daß die Last an jedem sie tragenden Transportmodul hydraulisch abgestützt ist, also in jedem Hydraulikzylinder zwischen Kolben und Zylindergehäuse ein Flüssigkeitspolster vorhanden ist. Auch eine Schwerpunktbestimmung ist möglich.

Aufgrund einer Ausbildung gemäß Anspruch 26 ist der Verlauf der Auflagefläche für die Last am Gestell bezüglich des Bodens, auf dem das Gestell steht, nicht festgelegt, insbesondere muß der Verlauf der Auflagefläche nicht parallel zum Boden sein. Vielmehr kann sich die Auflagefläche jeweils gemäß den Gegebenheiten zwischen Last und Boden anpassen.

Die Zeichnungen enthalten ein Ausführungsbeispiel eines erfindungsgemäßen Transportmoduls sowie mehrere schematische Darstellungen zur Verdeutlichung des Bewegungsablaufs bei einer Lastverschiebung und zur Verdeutlichung der Bewegungsmöglichkeiten für eine Last. Anhand der Zeichnungen wird die Erfindung nun näher erläutert.

Es zeigen
- Figur 1: das Ausführungsbeispiel in einer Seitenansicht, wobei das Gestell zur besseren Sicht auf die Stütze teilweise weggeschnitten ist,
- Figur 2: einen Schnitt entlang der Linie II-II aus Figur 1, wobei die Stütze teilweise nur in Ansicht dargestellt ist,
- Figur 3: in etwas vergrößertem Maßstab einen Schnitt entlang der Linie III-III aus Figur 1,
- Figur 4: in einem vergrößerten Maßstab einen Teilschnitt entlang der Linie IV-IV aus Figur 3,
- Figur 5: schematisch Gestell und Stütze eines Transportmoduls zu Beginn eines Bewegungstaktes,
- Figur 6: den Transportmodul nach Figur 5 nach einem Schritt des Gestells gegenüber der Stütze,
- Figur 7: den Transportmodul nach den Figuren 5 und 6 nach dem Nachfahren der Stütze,
- Figur 8: eine mit vier Transportmodulen unterstützte Last, die unter Beibehaltung ihrer Orientierung verschoben wird,
- Figur 9: eine mit vier Transportmodulen unterstützte Last, die um eine außerhalb von ihr befindliche Achse gedreht wird und
- Figur 10: eine von vier Transportmodulen unterstützte Last, die um ihre eigene Achse gedreht wird, wobei die vier Transportmodule jeweils gleichweit von der Achse entfernt und in den Ecken eines Quadrates angeordnet sind.

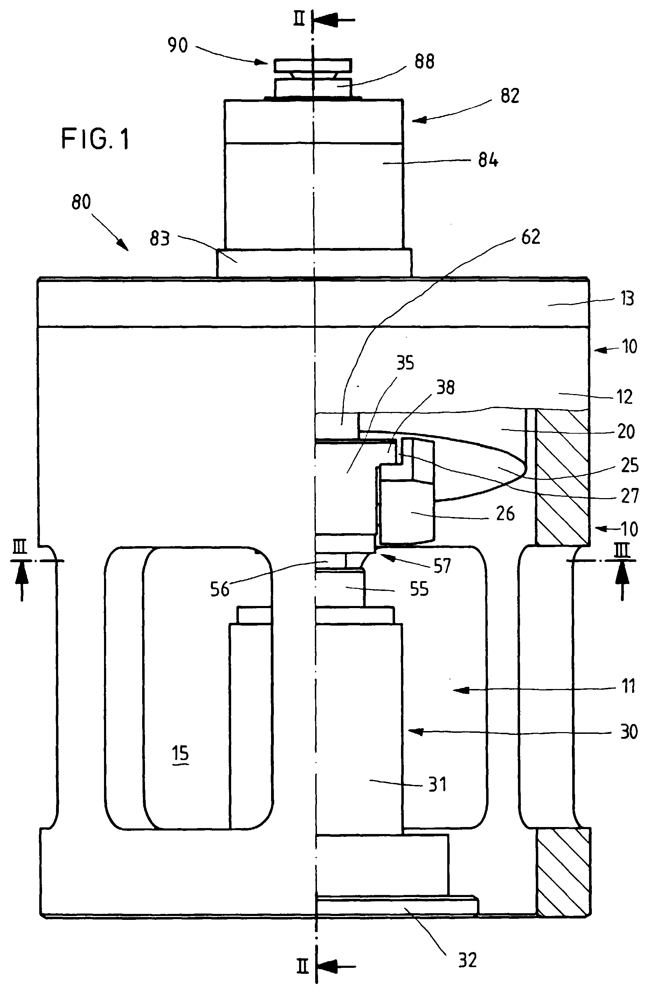

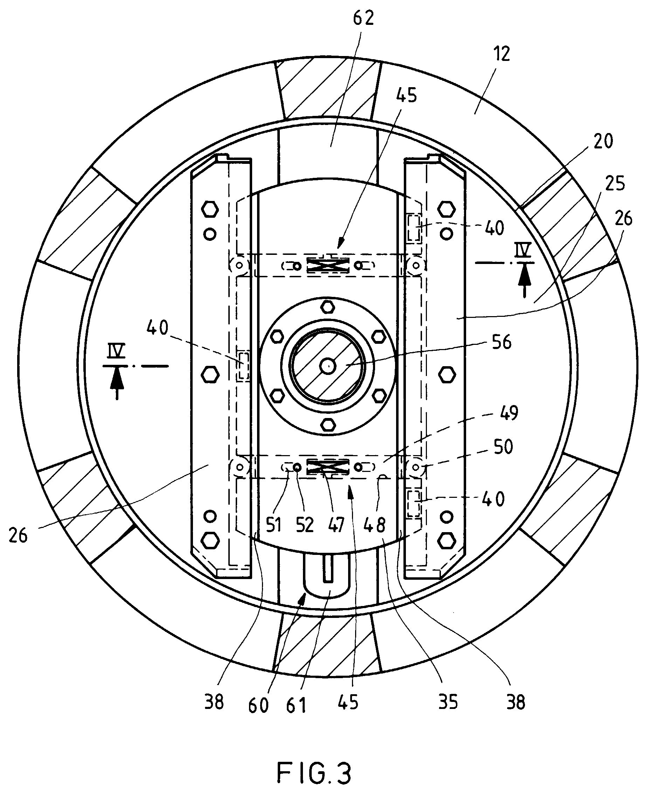

Das in den Figuren 1 bis 4 gezeigte Transportmodul 80 kann man sich aus zwei Hauptteilen, nämlich einem Gestell 10 und einer Stütze 11 zusammengesetzt vorstellen, von denen für das Bewegen einer Last jeweils das eine Hauptteil gegenüber dem anderen, fest auf dem Boden aufstehenden Hauptteil bewegt wird. Beim Bewegen der Stütze 11 findet dabei keine Bewegung der Last statt.

Das Gestell 10 weist einen topfartigen Bodenabstützkörper auf, der aus einem kreiszylindrischen Mantel 12 und einer Platte 13 besteht, die mit Schrauben 14 an einer Stirnseite des Mantels 12 befestigt ist. Mit der freien Stirnseite kann der Mantel 12 auf dem Boden aufsitzen. Im Mantel 12 sind im Sinne einer Gewichtsreduzierung Öffnungen 15 vorgesehen, die außerdem einen Blick auf die sich innerhalb des Gestells befindliche Stütze 11 zulassen.

Zentral befindet sich in der Platte 13 eine gestufte Bohrung 16. Im Bereich dieser Bohrung 16 ist auf die Platte 13 ein einfachwirkender Hubzylinder 82 aufgebaut. Dabei ist die Bohrung 16 nach oben hin zunächst durch eine aufgeschraubte Zwischenplatte 83 abgedeckt, die mit einer Ausdrehung zur Zentrierung des Hubzylinders 82 versehen ist. Durch die Zwischenplatte 83 kann eine Anpassung zwischen der Größe der Bohrung 16 und dem Hubzylinder 82 erfolgen, der vorzugsweise aus marktgängigen Größen ausgewählt wird.

Ist kein Hubzylinder 82 aufgebaut, so kann die Bohrung 16 auch durch eine Abdeckung, die nicht über die Platte 13 vorsteht, vor dem Eindringen von Schmutz geschützt werden.

Der Hubzylinder 82 weist ein im wesentlichen zweiteiliges Zylindergehäuse 84 bestehend aus einem Gehäusetopf 85 und einem Zylinderkopf 86 auf. Im Inneren des Zylindergehäuses 83 ist ein Kolben 87 verschiebbar, an dem eine gegenüber dem Kolben 87 im Durchmesser kleinere Kolbenstange 88 befestigt ist, die durch den Zylinderkopf 86 nach außen tritt. An ihrem äußeren Ende ist die Kolbenstange 88 mit einer Kugelkalotte 89 versehen, in die ein Tragteil 90 mit einem Kugelsegment 91, dessen Radius dem Radius der Kugelkalotte 89 entspricht, eingelegt ist. Eine Auflagefläche 92 für eine Last befindet sich an einem das Kugelsegment 91 überragenden Flansch 93 des Tragteils 90. Dieses und mit ihm die Auflagefläche sind also allseitig begrenzt verkippbar. Beim Einziehen der Kolbenstange 88 wirken die Gravitationskraft und eine Schraubendruckfeder 94 zusammen, die in dem durch das Zylindergehäuse 84, den Kolben 87 und die Kolbenstange 88 gebildeten Ringraum untergebracht ist. Eine allseitige Verkippbarkeit des die Auflagefläche aufweisenden Tragteils gegenüber den anderen Teilen des Gestells wird vorteilhafterweise auch dann vorgesehen, wenn das Tragteil nicht höhenverstellbar ist.

Zum Transport einer Last werden normalerweise mehrere Transportmodule 80 verwendet. Zunächst werden die sich zwischen dem Kolben 87 und dem Boden des Gehäusetopfes 85 befindlichen Druckräume mit einem Druckmittel beaufschlagt bis die Kolben 87 etwa auf halber Hubhöhe steht. Dann werden die Druckräume von der Druckmittelquelle getrennt. Die verwendeten Transportmodule 80 werden in Hebegruppen so unterteilt, daß eine statisch bestimmte Unterstützung der Last gegeben ist, und die Druckräume einer Hebegruppe hydraulisch miteinander verbunden sind. Zwischen den Druckräumen der Transportmodule 80 einer Hebegruppe kann nun, weil sich die Kolben ursprünglich nicht in einer Endposition befinden, Druckmittel hin- und herfließen.

In der Bohrung 16 ist ein keilförmiger Führungsblock 20 des Gestells 10 mit einem Zapfen 21, der mit einem Kragen 22 auf der Stufe 23 der Bohrung 16 aufliegen kann, um die bei Benutzung des Transportmoduls normalerweise im wesentlichen vertikal verlaufende Mittelachse 24 des Gestells 10 drehbar gegenüber dessen aus Mantel 12 und Platte 13 bestehenden Bodenabstützkörper gelagert. Durch den Kragen 22 des Zapfens 21 und die Stufe 23 der Bohrung 16 ist ein Axiallager für den Führungsblock 20 realisiert.

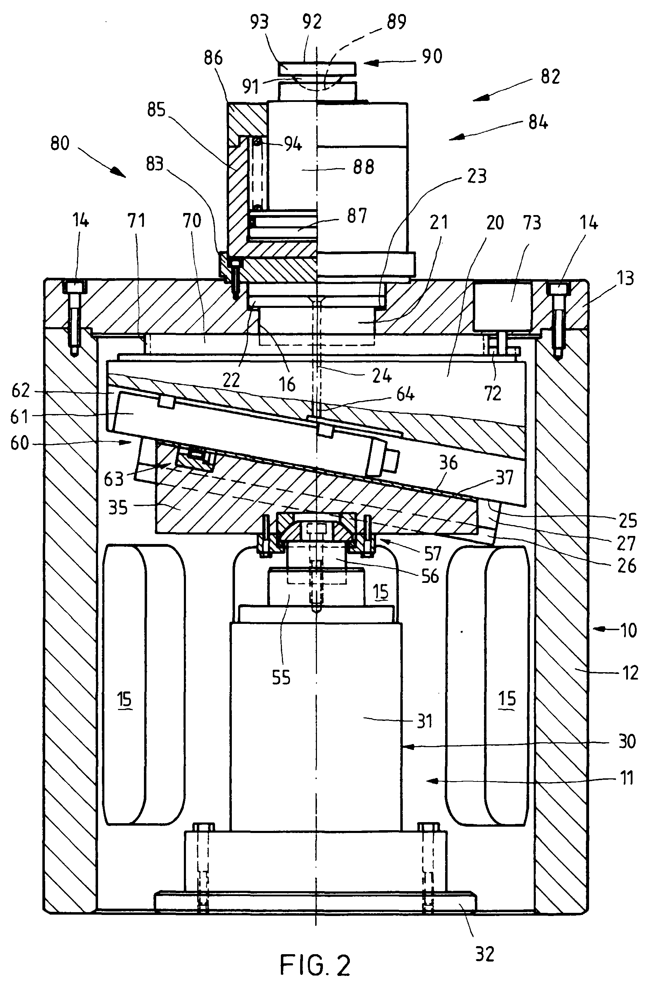

Der Führungsblock 20 kann innen großflächig an der Platte 13 anliegen, wie dies in Figur 2 gezeigt ist. Dabei besteht ein geringer Abstand zwischen dem Kragen 22 des Zapfens 21 und der Stufe 23 der Bohrung 16.

Der Platte 13 abgekehrt weist der Führungsblock 20 eine Keilfläche 25 auf, die zur Ebene der Platte 13 etwa 10° geneigt ist. An die Keilfläche sind im Abstand und parallel zueinander zwei L-förmige Führungsleisten 26 so angeschraubt, daß zwischen jeder Führungsleiste und der Keilfläche 25 eine jeweils zur anderen Führungsleiste hin offene Führungsnut 27 vorhanden ist. Die beiden Führungsleisten 26 verlaufen in Richtung des größten Gefälles auf der Keilfläche 25.

Die Stütze 11 wird im wesentlichen durch eine hydraulische Kolben-Zylindereinheit 30, die mit einer mit dem Zylinder 31 verschraubten Bodenplatte 32 auf dem Boden stehen kann, und durch einen zweiten keilförmigen Führungsblock 35 gebildet, der dem ersten Führungsblock 20 zugewandt eine Keilfläche 36 aufweist, in der er mit einer die Reibung vermindernden Gleitauflage 37 versehen ist. Die Neigung der Keilfläche 36 ist dieselbe wie die Neigung der Keilfläche 25. Mit den beiden Keilflächen 25 und 36 können die beiden Führungsblöcke 20 und 35 großflächig aufeinander aufliegen.

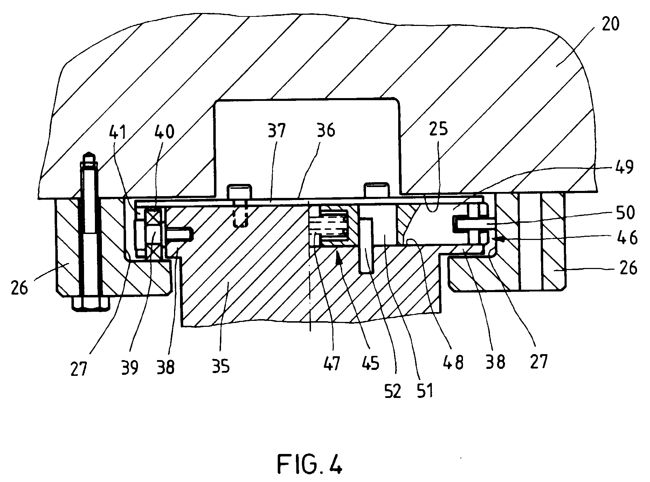

Wie besonders deutlich aus Figur 4 hervorgeht, besitzt der Führungsblock 35 seitliche Führungsleisten 38, mit denen er in die Führungsnuten 27 des Führungsblocks 20 hineingreift. An der einen Leiste 38 sind im Abstand voneinander mit Hilfe jeweils eines Schraubenbolzens 39 zwei Kugellager 40 befestigt. An der anderen Führungsleiste 38 ist mittig zwischen den beiden Kugellagern 40 an der einen Führungsleiste 38 mit einem Schraubenbolzen 39 ein weiteres Kugellager 40 befestigt. Die drei Kugellager 40 sind also in den Ecken eines Dreiecks angeordnet. Sie befinden sich jeweils in Aussparungen 41 der jeweiligen Führungsleiste 38. Ihre Außenringe bilden Rollen, die auf der unteren Seitenwand einer Führungsnut 27 entlangrollen können. Sofern die Keilflächen 25 und 36 der beiden Führungsblöcke 20 und 35 aneinander anliegen, besteht ein Abstand zwischen den Kugellagern 40 und der angesprochenen Seitenwand der Führungsnuten 27. Umgekehrt besteht ein Abstand zwischen den Keilflächen 25 und 36, wenn die Kugellager 40 auf den Führungsleisten 26 aufliegen, wie dies in Figur 4 der Fall ist.

Aus den Figuren ist ersichtlich, daß der lichte Abstand zwischen den beiden Führungsleisten 26 des Führungsblockes 20 um ein bestimmtes Maß größer ist als die Breite des Führungsblockes 35 sowohl im Bereich der Führungsleisten 38 als auch in einem Bereich unterhalb von diesen. Dies bedeutet, daß zwischen den beiden Führungsblöcken aufgrund des durch die unterschiedlichen Abmessungen vorhandenen Spiels eine Querverschiebung senkrecht zur Längsrichtung der Führungsleisten und auch eine Verschwenkung möglich ist. Wenn keine äußeren Kräfte angreifen, sollen die beiden Führungsblöcke 20 und 35 jedoch eine Mittellage einnehmen, in der die Abstände zwischen dem zweiten Führungsblock 35 und beiden Führungsleisten 26 des Führungsblocks 20 gleich groß sind. Die Mittellage wird durch zwei Zentriervorrichtungen 45 herbeigeführt, von denen jede zwei Federstützen 46 und eine zwischen den beiden Federstützen eingespannte Druckfeder 47 aufweist. Die beiden Federstützen 46 und die Druckfeder 47 befinden sich in einer Quernut 48 des zweiten Führungsblocks 35, die durch die Gleitschicht 37 abgedeckt ist. Jede Federstütze besteht aus einem in der Quernut 48 geführten Bolzen 49 und einem an dem Bolzen gelagerten Kugellager 50, dessen Außenring am Boden einer Führungsnut 27 entlangrollen kann. Jeder Bolzen 49 ist mit einer in Längsrichtung der Quernut 48 länglichen Aussparung 51 versehen, in die ein im Führungsblock 35 befestigter Stift 52 hineinragt. Dadurch ist der Weg eines Bolzens 49 nach außen begrenzt. Wenn die beiden Führungsblöcke 20 und 35 zueinander die zentrierte Mittellage einnehmen, werden die Bolzen 49 von der Druckfeder 47 gegen den jeweiligen Stift 52 gedrückt. Zwischen den Kugellagern 50 und den Führungsleisten 26 des ersten Führungsblocks 20 besteht dann ein sehr geringer Abstand. Wenn die beiden Führungsblöcke 20 und 35 um mehr als diesen minimalen Abstand quer verschoben werden, wird der eine Bolzen 49 einer Zentriervorrichtung 45 zurückgedrückt, während der andere wegen des Stiftes 52 in Ruhe bleibt. Dadurch wird die Feder 47 stärker vorgespannt und erzeugt eine Rückstellkraft. Die beiden Quernuten 48 und mit ihnen die beiden Zentriervorrichtungen 45 befinden sich im gleichen Abstand von der Mittelachse der Stütze 11.

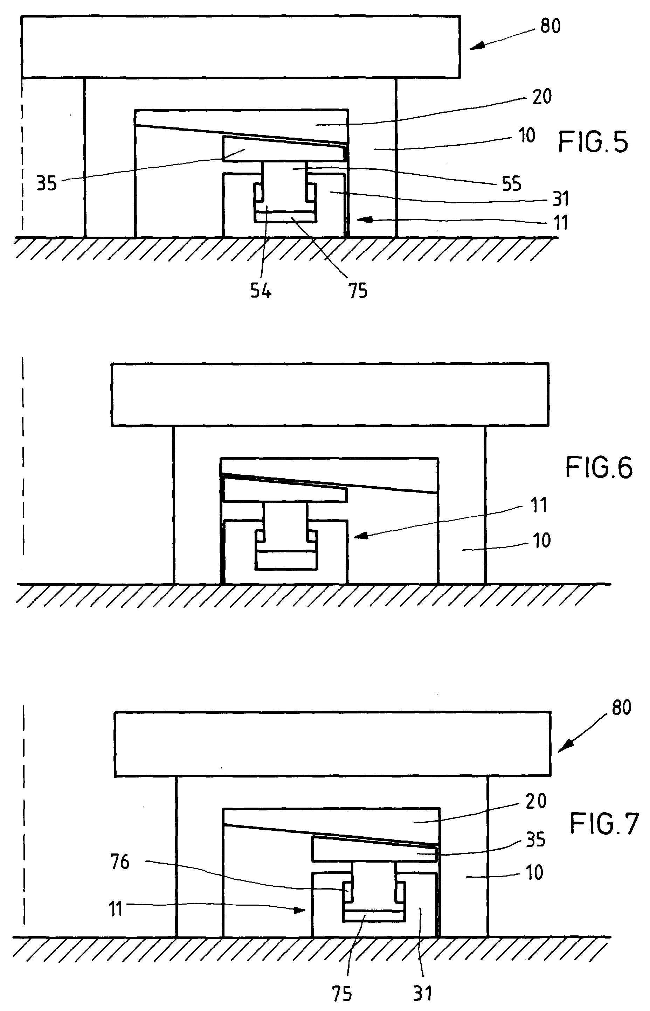

Die Kolben-Zylindereinheit 30 ist doppeltwirkend und besitzt eine aus dem Zylinder 31 heraustretende Kolbenstange 55, die innerhalb des Zylinders 31 mit einem in den Figuren 5 bis 7 angedeuteten Kolben 54 verbunden ist und die an ihrem freien Ende über einen Adapter 56 und ein Universalgelenk 57 den Führungsblock 35 trägt. Das Universalgelenk 57 läßt ein leichtes Kippen des Führungsblocks 35 bezüglich der Mittelachse des Zylinders 31 zu. Dadurch können Bodenunebenheiten, die zu unterschiedlichen Ausrichtungen der Mittelachsen des Gestells und der Stütze führen, ausgeglichen werden. Zwischen Kolben 54 und Zylinder 31 ist ein Drehgelenk realisiert.

Der Weg, den die Stütze 10 und das Gestell 11 gegeneinander bewegt werden, ist durch einen Weggeber 60 erfaßbar, der im Ausführungsbeispiel als Potentiometer ausgebildet ist. Der Teil 61 des Weggebers, der mit dem Gestell 10 bewegt wird, ist in eine Nut 62 eingebracht, die sich in der Keilfläche 25 des Führungsblocks 20 befindet und in Richtung von dessen größten Gefälle verläuft. Der Teil 61 enthält einen aufgewickelten elektrischen Widerstand und eine elektrische Schleifbahn. Der Schleifer 63 ist in einer Aussparung des Führungsblocks 35 der Stütze 11 befestigt und fährt auf dem gewickelten elektrischen Widerstand und auf der Schleifbahn entlang. Aus dem Teil 61 sind drei nicht näher dargestellte elektrische Kabel, von denen zwei mit den Enden des Widerstands und eines mit der Schleifbahn verbunden sind heraus- und über einen in der Achse 24 liegenden Kanal 64 nach außen geführt. Auch wenn der Weggeber 60 genauso wie die Keilflächen 25 und 36 zur Horizontalen geneigt ist, läßt sich die horizontale Bewegung zwischen Gestell 10 und Stütze 11 leicht erfassen, da die Neigung bekannt ist.

Ein sich unmittelbar unterhalb der Platte 13 befindlicher Bund 70 des Führungsblocks 20 ist außen mit einer Verzahnung 71 versehen. In diese Verzahnung greift ein Ritzel 72 ein, das von einem in der Platte 13 befestigten Hydromotor 73 angetrieben werden kann. Alternativ kann ein Antriebsmotor auch außen am Gestell 10 befestigt sein und z. B. über einen Riemen-, Ketten-, Schneckentrieb oder Ähnliches ein drehfest mit dem Ritzel 72 verbundenes Rad antreiben.

Ausgehend von der Position eines Transportmoduls 80, die für Gestell 10 und Stütze 11 in Figur 5 gezeigt ist, soll nun eine Last bewegt werden, die auf dem Gestell 10 aufliegt. Es wird dazu in der kolbenseitigen Druckkammer 75 des Zylinders 31 ein Druck aufgebaut und dadurch über die Keilflächen der Führungsblöcke 20 und 35 eine Kraft auf das Gestell 10 ausgeübt, die dessen Bodenauflagekraft verringert. Schließlich wird ein Druck erreicht, bei dem die Reibkraft zwischen dem Gestell 10 und dem Boden so gering ist, daß das Gestell beginnt, mit seiner Keilfläche 25 die Keilfläche 36 der Stütze 11 hinabzugleiten. Durch weitere Zufuhr von Druckmittel in die Druckkammer 75 fährt die Kolbenstange 55 des Zylinders 31 allmählich aus, wobei sich entsprechend der Geschwindigkeit der Ausfahrbewegung der Kolbenstange eine Geschwindigkeit der Gleitbewegung des Gestells einstellt. Am Ende des freien Bewegungsbereichs des Gestells 10 gegenüber der Stütze 11 wird die Ölzufuhr in die Druckkammer 75 gestoppt, so daß auch die Kolbenstange stoppt und das Gestell 10 sich fest auf den Boden aufsetzt. Wie aus Figur 6 ersichtlich, die den erreichten Zustand zeigt, hat sich nun das Gestell 10 nach rechts bewegt, während die Stütze 11 dieselbe Position wie in Figur 5 einnimmt. Nun wird die kolbenseitige Druckkammer 75 von Druck entlastet und in der kolbenstangenseitigen Druckkammer 76 ein Druck aufgebaut. Dabei legen sich die Kugellager 40 am Führungsblock 35 auf die Führungsleisten 26 des Führungsblocks 20 auf. Die Stütze 11 hängt sozusagen am Gestell 10. Schließlich ist die Reibkraft zwischen der Stütze 11 und dem Boden so gering, daß die Kugellager 40 beginnen, auf den Führungsleisten 26 abzurollen. Damit die Bewegung nicht sofort wieder endet, wird nun die Kolbenstange 55 allmählich in den Zylinder 31 zurückgezogen, wobei die Stütze 11 bis zum Ende des möglichen Bewegungsbereichs am Gestell 10 abrollt. Zuletzt nimmt die Stütze 11 die in Figur 7 gezeigte Position ein. Man erkennt, daß die relative Lage zwischen dem Gestell 10 und der Stütze 11 dieselbe wie in Figur 5 ist, daß sich jedoch beide Teile des Transportmoduls 80 um eine bestimmte Strecke aus der Position nach Figur 5 entfernt haben.

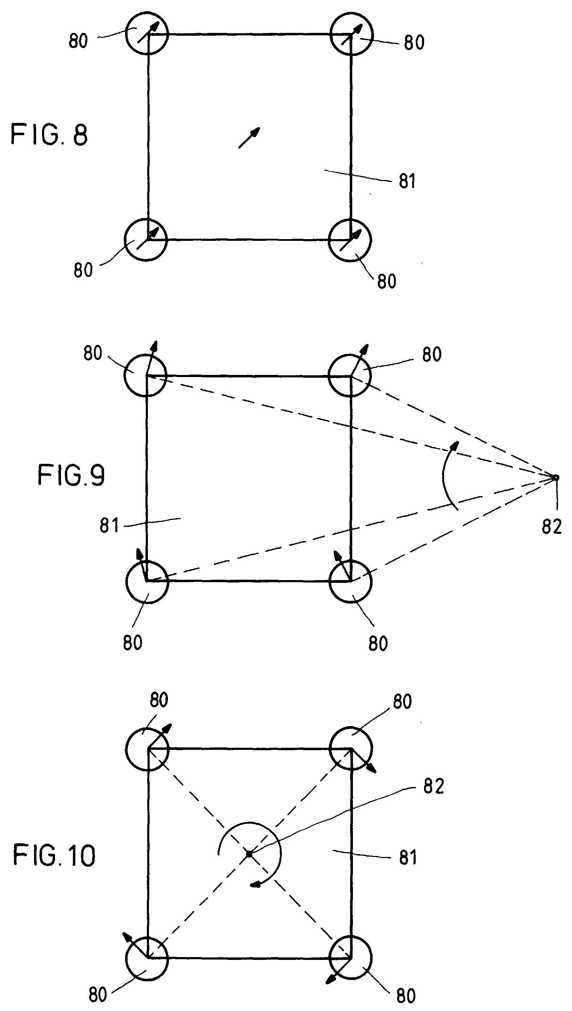

Grundsätzlich ist ein Lastentransport mit nur einem Transportmodul möglich. Meist wird jedoch eine schwere Last von mehreren Transportmodulen unterstützt sein. Soll nun diese Last geradlinig bewegt werden, so sind die Führungsblöcke 20 und 35 aller verwendeten Transportmodule in dieselbe Richtung ausgerichtet, wie dies in Figur 8 der Fall ist, die eine mit vier Transportmodulen 80 unterstützte Last 81 zeigt. Durch die Pfeile in den Transportmodulen ist die Richtung des größten Gefälles der Keilflächen am Gestell 10 und an der Stütze 11 angedeutet. Die Bewegungsrichtung der Last stimmt mit der Richtung dieser Pfeile überein. Soll nun die Last in eine andere Richtung, als sie in Figur 8 angedeutet ist, bewegt werden, werden in einem Zustand, in dem die Stütze 11 durch Druckbeaufschlagung der kolbenstangenseitigen Druckkammer 76 vom Boden leicht abgehoben ist, der Führungsblock 20 des Gestells 10 sowie die gesamte Stütze mit Hilfe des Hydromotors 73 um die Achse 24 um den gewünschten Winkel gegenüber der Platte 13 und dem Mantel 12 des Gestells gedreht. Die Keilflächen aller Transportmodule sind dann wieder in dieselbe Richtung ausgerichtet, in die auch die Last unter Beibehaltung ihrer Orientierung bewegt wird.

Will man eine Last entsprechend einer gekrümmten Kurve verfahren und dabei auch die Orientierung der Last entsprechend der Krümmung der Kurve verändern, so müssen die Keilflächen der die Last unterstützenden Transportmodule 80 unterschiedlich ausgerichtet werden. In Figur 9 ist durch Pfeile in den Transportmodulen 80 eine Ausrichtung für den Fall angedeutet, daß die Transportmodule eine Last 81 in den vier Ecken eines Quadrates unterstützen und die Last um einen außerhalb dieses Quadrates liegenden Drehpunkt 82 verschwenkt werden soll. Und zwar sind die Führungsblöcke 20 und 35 so ausgerichtet, daß die Richtung des größten Gefälles an den Keilflächen senkrecht auf Linien steht, die den Drehpunkt 82 mit der Mittelachse 24 des jeweiligen Gestells 10 verbinden und die in Figur 9 gestrichelt angedeutet sind. Bei einer Kurvenfahrt gemäß Figur 9 ist der Bewegung des Führungsblocks in Richtung des größten Gefälles der Keilflächen eine Querbewegung und eine Schwenkbewegung überlagert. Diese Überlagerung ist aufgrund des in Querrichtung bestehenden Spiels zwischen den beiden Führungsblöcken möglich. Ohne dieses Spiel würden die beiden Führungsblöcke klemmen und eine Kurvenfahrt verhindern. Die am Ende der Bewegung des Gestells 10 gegenüber der Stütze 11 bestehende Verschwenkung zwischen den Führungsblöcken 20 und 35 wird durch die Zentriervorrichtungen 45 rückgängig gemacht, während die Stütze 11 dem Gestell nachgefahren wird. Nun kann ohne weitere Verdrehung der Führungsblöcke gegenüber dem Bodenabstützkörper 12, 13 des Gestells 10 der nächste Bewegungsschritt gemacht werden. Bei sehr kleinen Krümmungen der Bewegungslinie einer Last kann es notwendig werden, die Schrittlänge zu verkürzen.

Gemäß Figur 10 kann eine Last 81, die von mehreren Transportmodulen 80 unterstützt ist, auch auf der Stelle gedreht werden. Wiederum sind die Keilflächen senkrecht zu Linien ausgerichtet, die vom Drehpunkt 82 der Last zur Achse 24 der Gestelle führen.

## Patentansprüche

1. Transportmodul, das zum Bewegen schwerer Lasten über einen Boden vorgesehen ist und folgende Merkmale aufweist:
a) Ein Gestell (10), auf das die Last auflegbar ist, ist auf den Boden aufsetzbar;
b) eine Stütze (11) ist auf den Boden aufsetzbar;
c) durch einen Aktuator (30) des einen Teils (11) ist die Bodenauflagekraft des Gestells (10) unter Erhöhung der Bodenauflagekraft der Stütze (11) bis unter das Eigengewicht verringerbar;
d) das Gestell (10) und die Stütze (11) weisen ein erstes Paar schiefer Bahnen (25, 36) auf, über die das Gestell (10) an der Stütze (11) abstützbar ist und das Gestell (10) bei genügender Verringerung seiner Bodenauflagekraft gegenüber der Stütze (11) horizontal verfahrbar ist;
**gekennzeichnet** durch folgende Merkmale:
e) durch den Aktuator ist die Bodenauflagekraft der Stütze (11) unter Erhöhung der Bodenauflagekraft des Gestells (10) bis unter das Eigengewicht verringerbar;
f) das Gestell (10) und die Stütze (11) weisen ein zweites Paar schiefer Bahnen (27, 40) auf, über die die Stütze (11) am Gestell (10) abstützbar ist und die Stütze (11) bei genügender Verringerung ihrer Bodenauflagekraft gegenüber dem Gestell (10) horizontal verfahrbar ist.

2. Transportmodul nach Anspruch 1, **dadurch gekennzeichnet**, daß das Gestell (10) sich an gegenüberliegenden Seiten der Stütze (11) befindliche erste Führungselemente (40) mit zweiten Führungselementen (26) untergreift und an den ersten Führungselementen (40) und zweiten Führungselementen (26) das zweite Paar schiefer Bahnen (27, 40) gebildet ist.

3. Transportmodul nach Anspruch 2, **dadurch gekennzeichnet**, daß sich das erste Paar schiefer Bahnen (25, 36) oberhalb des zweiten Paares schiefer Bahnen (27, 40) befindet.

4. Transportmodul nach einem vorhergehenden Anspruch, **dadurch gekennzeichnet**, daß das erste Paar schiefer Bahnen durch ein Paar von aufeinander gleitbaren schiefen Flächen (25, 36) und das zweite Paar schiefer Bahnen durch eine schiefe Fläche (27) und durch darauf abrollende Wälzkörper (40) gebildet ist.

5. Transportmodul nach einem vorhergehenden Anspruch, **dadurch gekennzeichnet**, daß ein Paar schiefer Bahnen durch eine schiefe Fläche (27) und durch Rollen (40) gebildet ist, die mit einer festen Achse in dem einen Teil (11), insbesondere in der Stütze (11), drehbar gelagert sind.

6. Transportmodul nach Anspruch 5, **dadurch gekennzeichnet**, daß eine schiefe Bahn durch wenigstens drei Rollen (40) gebildet ist, die in den Ecken eines Dreiecks angeordnet sind.

7. Transportmodul nach Anspruch 6, **dadurch gekennzeichnet**, daß eine schiefe Bahn durch genau drei Rollen (40) gebildet ist, daß zwei dieser Rollen (40) in derselben senkrecht zu ihren Achsen verlaufenden Ebene und die dritte Rolle (40) in einem Abstand zu dieser Ebene etwa mittig zwischen den beiden anderen Rollen (40) angeordnet ist.

8. Transportmodul nach einem der Ansprüche 5 bis 7, **dadurch gekennzeichnet**, daß eine Rolle (40) durch den Außenring eines Wälzlagers gebildet ist, das mit seinem Innenring fest sitzt.

9. Transportmodul nach einen vorhergehenden Anspruch, **dadurch gekennzeichnet**, daß das Gestell (10) einen ersten Führungsblock (20) mit schiefen Bahnen (25, 27) und die Stütze (11) einen zweiten Führungsblock (35) mit schiefen Bahnen (36, 40) aufweist und daß zwischen dem einen Führungsblock (35) und dem Gestell bzw. der Stütze (11) ein Universalgelenk (57) vorhanden ist.

10. Transportmodul nach einem vorhergehenden Anspruch, **dadurch gekennzeichnet**, daß der Aktuator (30) zur Stütze (11) gehört und mit ihm die relative vertikale Position eines die schiefen Bahnen (36, 40) der Stütze (11) aufweisenden Führungsblocks (35) zu einem Bodenabstützkörper (31, 32) der Stütze (11) veränderbar ist.

11. Transportmodul nach einem vorhergehenden Anspruch, **dadurch gekennzeichnet**, daß der Aktuator (30) derart angeordnet ist, daß seine Verstellbewegung wenigstens annähernd rein vertikal zum Boden erfolgt.

12. Transportmodul nach einem vorhergehenden Anspruch, **dadurch gekennzeichnet**, daß der Aktuator eine doppeltwirkende hydraulische Kolben-Zylindereinheit (30) ist.

13. Transportmodul nach Anspruch 12, **dadurch gekennzeichnet**, daß die Stütze (11) die Kolben-Zylindereinheit (30), von der der Zylinder (31) auf den Boden aufsetzbar ist und deren am Kolben (54) befestigte Kolbenstange (55) den Boden abgewandt aus dem Zylinder (31) heraustritt, und einen Führungsblock (35) umfaßt, an dem die schiefen Bahnen (36, 40) der Stütze (11) ausgebildet sind und der von der Kolbenstange getragen ist, und daß das Gestell (10) topfförmig ausgebildet und über die Stütze (11) gestülpt ist und innen an seinem Boden (13) einen Führungsblock (20) mit den schiefen Bahnen (25, 27) des Gestells (10) aufweist.

14. Transportmodul nach einem vorhergehenden Anspruch, **dadurch gekennzeichnet**, daß das Gestell (10) einen ersten Führungsblock (20) mit den schiefen Bahnen (25, 27) des Gestells (10) und einen Bodenabstützkörper (12, 13) umfaßt, daß die Stütze (11) einen zweiten Führungsblock (35) mit den schiefen Bahnen (36, 40) der Stütze (11) aufweist und daß die beiden Führungsblöcke (20, 35) relativ zum Bodenabstützkörper (12, 13) des Gestells (10) gemeinsam um eine vertikale Achse (24) verdrehbar sind.

15. Transportmodul nach Anspruch 14, **dadurch gekennzeichnet**, daß die beiden Führungsblöcke (20, 35) in einem Winkelbereich von mindestens 270 Grad gegenüber dem Bodenabstützkörper (12, 13) des Gestells (10) verdrehbar sind.

16. Transportmodul nach Anspruch 14 oder 15, **dadurch gekennzeichnet**, daß am Gestell (10) ein Motor (73), insbesondere ein Hydromotor, zum Verdrehen der Führungsblöcke (20, 35) angeordnet ist.

17. Transportmodul nach einem vorhergehenden Anspruch, **dadurch gekennzeichnet**, das das Gestell (10) einen ersten Führungsblock (20) mit schiefen Bahnen (25, 27) und die Stütze (11) einen zweiten Führungsblock (35) mit schiefen Bahnen (36, 40) aufweist, daß zwischen den beiden Führungsblöcken (20, 35) ein seitliches Spiel besteht und daß Zentriermittel (45) zur Zentrierung der Führungsblöcke (20, 35) zueinander in einer Mittelstellung vorhanden sind.

18. Transportmodul nach Anspruch 17, **dadurch gekennzeichnet**, daß die Zentriermittel eine Zentriervorrichtung (45) mit zumindest einer am einen Führungsblock (35) abstützbaren Feder (47) und mit zumindest einer in jeder relativen Lage der beiden Führungsblöcke (20, 35) in Führungsrichtung zueinander von der Feder (47) an den anderen Führungsblock (20) andrückbaren Federstütze (46) umfassen.

19. Transportmodul nach Anspruch 18, **dadurch gekennzeichnet**, daß die Zentriermittel eine Zentriervorrichtung (45) umfassen, die eine an dem einen Führungsblock (35) angeordnete Feder (47) und zwei an den Führungsblock (35) quer zur Verfahrrichtung der beiden Führungsblöcke (20, 35) geführte Federstützen (46) aufweist, zwischen denen die Feder (47) eingespannt ist und die von der Feder (47) nach außen auf den anderen Führungsblock (20) zu gedrückt werden, und daß der Weg jeder Federstütze (46) nach außen durch einen Anschlag (52) an dem einen Führungsblock (35) derart begrenzt ist, daß in der Mittelstellung der beiden Führungsblöcke (20, 35) zueinander eine Federstütze (46) nur einen geringen Abstand vom Anschlag oder vom anderen Führungsblock (20) hat.

20. Transportmodul nach Anspruch 18 oder 19, **dadurch gekennzeichnet**, daß die Zentriermittel zwei mit einem Führungsblock (35) mitbewegte Zentriervorrichtungen (45) aufweisen, die in Verfahrrichtung der beiden Führungsblöcke (20, 35) einen Abstand voneinander haben.

21. Transportmodul nach einem vorhergehenden Anspruch, **dadurch gekennzeichnet**, daß die Stütze (11) ein Drehgelenk mit einer vertikalen Achse aufweist und daß ein Führungsblock (35) mit den schiefen Bahnen (36, 40) der Stütze (11) gegenüber einem Bodenabstützkörper (31, 32) der Stütze (11) um die vertikale Achse des Drehgelenks verdrehbar ist.

22. Transportmodul nach einem vorhergehenden Anspruch, **dadurch gekennzeichnet**, daß die relative Bewegung zwischen Gestell (10) und Stütze (11) in Verfahrrichtung durch einen Weggeber (60) erfaßbar ist.

23. Transportmodul nach Anspruch 22, **dadurch gekennzeichnet**, daß das Gestell (10) einen ersten Führungsblock (20) mit einer ersten Keilfläche (25) und die Stütze (11) einen zweiten Führungsblock (35) mit einer Zweiten Keilfläche (36) aufweist und daß ein Teil (61, 63) des Weggebers (60) in eine Aussparung (62) in einer Keilfläche (25, 36) eines Führungsblocks (20, 35) eingesetzt ist.

24. Transportmodul nach einem vorhergehenden Anspruch, **dadurch gekennzeichnet**, daß ein die Auflagefläche (92) für die Last aufweisendes Tragteil (90) des Gestells (10) höhenverstellbar ist.

25. Transportmodul nach Anspruch 24, **dadurch gekennzeichnet**, daß das Tragteil (90) durch einen hydraulischen Hubzylinder (82) des Gestells (10) höhenverstellbar ist.

26. Transportmodul nach einem vorhergehenden Anspruch, **dadurch gekennzeichnet**, daß ein die Auflagefläche (92) für die Last aufweisendes Tragteil (90) des Gestells (10) allseitig verkippbar ist.

## Claims

1. Transport module provided for moving heavy loads over a floor and having the following features:
a) a frame (10) on which the load can be rested can be placed on the floor;
b) a support (11) can be placed on the floor;
c) by means of an actuator (30) of one part (11) a force with which the frame (10) rests on the floor can be reduced to a point below its own weight by increasing the force with which the support (11) abuts the floor;
d) the frame (10) and the support (11) have a first pair of inclined Paths (25, 36) by which the frame (10) can be supported on the support (11) and the frame (10) can be moved horizontally relative to the support (11) with sufficient reduction of the force with which it rests on the floor;
**characterized** by the following features:
e) by means of the actuator the force with which support (11) rests on the floor can be reduced to a point below its own weight by increasing the force with which frame (10) abuts the floor;
f) the frame (10) and the support (11) have a second pair of inclined paths (27, 40) by which the support (11) can be supported on the frame (10) and the support (11) can be moved horizontally with respect to the frame (10) with sufficient reduction of the force that it applies to the floor.

2. Transport module according to Claim 1, **characterized in that** the frame (10) grips below first guide elements (40) located on opposite sides of the support (11) by second guide elements (26) and the second pair of inclined paths (27, 40) is formed on the first guide elements (40) and the second guide elements (26).

3. Transport module according to Claim 2, **characterized in that** the first pair of inclined paths (25, 36) is located above the second pair of inclined paths (27, 40).

4. Transport module according to any of the preceding claims, **characterized in that** the first pair of inclined paths is formed by a pair of inclined surfaces (25, 36) that can slide on one another and the second pair of inclined paths is formed by an inclined surface (27) and by rolling bodies (40) that roll on it.

5. Transport module according to any of the preceding claims, **characterized in that** a pair of inclined paths is formed by an inclined surface (27) and by rollers (40) that are rotatably mounted with a fixed axis in one part (11), especially in the support (11).

6. Transport module according to Claim 5, **characterized in that** an inclined path is formed by at least three rollers (40) that are located at the corners of a triangle.

7. Transport module according to Claim 6, **characterized in that** an inclined path is formed by precisely three rollers (40), in that two of these rollers (40) are located in the same plane that runs perpendicularly to their axes and the third roller (40) is located at a distance from this plane approximately centrally between the two other rollers (40).

8. Transport module according to any of Claims 5 to 7, **characterized in that** one roller (40) is formed by the outer race of a rolling bearing that is permanently attached to its inner race.

9. Transport module according to any of the preceding claims, **characterized in that** the frame (10) has a first guide block (20) with inclined paths (25, 27) and the support (11) has a second guide block (35) with inclined paths (36, 40) and in that a universal joint (57) is provided between one guide block (35) and the frame and/or the support (11).

10. Transport module according to any of the preceding claims, **characterized in that** the actuator (30) is part of the support (11) and can be used to vary the vertical position of a guide block (35) that has the inclined paths (36, 40) of the support (11) relative to a floor support body (31, 32) of the support (11).

11. Transport module according to any of the preceding claims**, characterized in that** the actuator (30) is so located that its adjusting movement takes place at least approximately purely vertically with respect to the floor.

12. Transport module according to any of the preceding claims, **characterized in that** the actuator is a double-acting hydraulic piston-cylinder unit (30).

13. Transport module according to Claim 12, **characterized in that** the support (11) comprises the piston-cylinder unit (30) by which the cylinder (31) can be placed on the floor and its piston rod (55) fastened to the piston (54) emerges from the cylinder (31) facing away from the floor and a guide block (35), on which the inclined paths (36, 40) of the support (11) are formed and which is supported by the piston rod, and in that the frame (10) is made pot-shaped and upset over the support (11) and has internally at its bottom (13) a guide block (20) with the inclined paths (25, 27) of the frame (10).

14. Transport module according to any of the preceding claims, **characterized in that** the frame (10) comprises a first guide block (20) with the inclined paths (25, 27) of the frame (10) and a floor support body (12, 13), in that the support (11) has a second guide block (35) with the inclined paths (36, 40) of support (11), and in that the two guide blocks (20, 35) are rotatable relative to floor support body (12, 13) of the frame (10) jointly around a vertical axis (24).

15. Transport module according to Claim 14, **characterized in that** the two guide blocks (20, 35) can be rotated in an angle range of at least 270 relative to the floor support body (12, 13) of the frame (10).

16. Transport module according to Claim 14 or 15, **characterized in that** a motor (73), especially a hydraulic motor, is located on the frame (10) for rotating the guide blocks (20, 35).

17. Transport module according to any of the preceding claims, **characterized in that** the frame (10) has a first guide block (20) with inclined paths (25, 27) and the support (11) has a second guide block (35) with inclined paths (36, 40), in that there is lateral play between the two guide blocks (20, 35), and in that centring means (45) are provided for centring the guide blocks (20, 35) with respect to one another in a central position.

18. Transport module according to Claim 17, **characterized in that** the centring means comprise a centring device (45) with at least one spring (47) that can be supported on a guide block (35) and with at least one spring support (46) which, in each relative position of the two guide blocks (20, 35) in the guide direction towards one another, can be pressed by the spring (47) against the other guide block (20).

19. Transport module according to Claim 18, **characterized in that** the centring means comprise a centring device (45) that has a spring (47) located on a guide block (35) and two spring supports (46) guided on the guide block (35) transversely to the travel direction of the two guide blocks (20, 35) between which the spring (47) is compressed and which are forced outward by the spring (47) against the other guide block (20), and in that the travel of each spring support (46) outward is limited by a stop (52) on one guide block (35) in such fashion that in the middle position of the two guide blocks (20, 35) with respect to one another, one spring support (46) is located only a short distance from the stop or from the other guide block (20).

20. Transport module according to Claim 18 or 19, **characterized in that** the centring means comprise centring devices (45) that move along with a guide block (35) and are located at a distance from one anther in the travel direction of the two guide blocks (20, 35).

21. Transport module according to any of the preceding claims, **characterized in that** the support (11) has a rotary joint with a vertical axis and in that a guide block (35) can be rotated with the inclined paths (36, 40) of the support (11) relative to a floor support body (31, 32) of the support (11) around the vertical axis of the rotary joint.

22. Transport module according to any of the preceding claims, **characterized in that** the relative movement between the frame (10) and the support (11) in the travel direction can be detected by a travel sensor (60).

23. Transport module according to Claim 22, **characterized in that** the frame (10) has a first guide block (20) with a first wedge surface (25) and the support (11) has a second guide block (35) with a second wedge surface (36) and in that a part (61, 63) of the travel sensor (60) is accommodated in a recess (62) in a wedge surface (25, 36) of a guide block (20, 35).

24. Transport module according to any of the preceding claims, **characterized in that** a supporting part (90) of frame (10) that has the supporting surface (92) for the load is adjustable in height.

25. Transport module according to Claim 24, **characterized in that** the supporting part (90) is adjustable in height by a hydraulic lifting cylinder (82) of the frame (10).

26. Transport module according to any of the preceding claims, **characterized in that** a support part (90) of the frame (10) that has the supporting surface (92) for the load can be tilted in all directions.

## Revendications

1. Un module de transport, qui est prévu pour le transport de charges lourdes sur un sol et présente les caractéristiques suivantes :
a) un socle (10), sur lequel peut être posée la charge, peut être appuyé contre le sol ;
b) un support (11) peut être appuyé contre le sol ;
c) à l'aide d'un actuateur (30) de l'un des éléments (11), la force exercée sur le sol par le socle (10) peut être réduite jusqu'à devenir inférieure au poids propre de celui-ci, cependant que la force exercée sur le sol par le support (11) augmente ;
d) le socle (10) et le support (11) présentent une première paire de voies (25, 36) inclinées, au travers desquelles le socle (10) peut être supporté par le support (11) et le socle (10) peut être déplacé de façon horizontale par rapport au support (11), lorsque la réduction de la force qu'il exerce sur le sol est suffisante ;
**caractérisé par** les marques distinctives suivantes :
e) à l'aide du actuateur, la force exercée sur le sol par le support (11) peut être réduite jusqu'à devenir inférieure au poids propre de celui-ci, cependant que la force exercée sur le sol par le socle (10) augmente ;
f) le socle (10) et le support (11) présentent une seconde paire de voies (27, 40) inclinées, au travers desquelles le support (11) peut être supporté par le socle (10) et le support (11) peut être déplacé de façon horizontale par rapport au socle (10), lorsque la réduction de la force qu'il exerce sur le sol est suffisante.

2. Un module de transport conforme à la revendication n° 1, **caractérisé en ce que** le socle (10) saisit à l'aide de seconds éléments (26) de guidage en dessous de premiers éléments (40) de guidage, lesquels sont disposés à des côtés opposés du support (11), et la seconde paire de voies (27, 40) inclinées est formée au niveau des premiers éléments (40) de guidage et seconds éléments (26) de guidage.

3. Un module de transport conforme à la revendication n° 2, **caractérisé en ce que** la première paire de voies (25, 36) inclinées est disposée au-dessus de la seconde paire de voies (27, 40) inclinées.

4. Un module de transport conforme à une revendication précédente, **caractérisé en ce que** la première paire de voies inclinées est formée par une paire de surfaces (25, 36) inclinées pouvant coulisser l'une sur l'autre et la seconde paire de voies inclinées est formée par une surface (27) inclinée et par des corps (40) cylindriques roulant sur celle-ci.

5. Un module de transport conforme à une revendication précédente, **caractérisé en ce que** une paire de voies inclinées est formée par une surface (27) inclinée et par des rouleaux (40), lesquels sont montés avec un axe fixe dans l'un des éléments (11), en particulier dans le support (11).

6. Un module de transport conforme à la revendication n° 5, **caractérisé en ce que** une voie inclinée est formée par au moins trois rouleaux (40), lesquels sont disposés aux trois coins d'un triangle.

7. Un module de transport conforme à la revendication n° 6, **caractérisé en ce que** une voie inclinée est formée par exactement trois rouleaux (40), que deux de ces rouleaux (40) sont disposés dans un même plan, lequel est perpendiculaire à leurs axes, et le troisième rouleau (40) est disposé à une certaine distance de ce plan, à peu près équidistant des deux autres rouleaux (40).

8. Un module de transport conforme à une des revendications n° 5 à n° 7, **caractérisé en ce que** un rouleau (40) est formé par la bague extérieure d'un palier cylindrique, dont la bague intérieure est fixe.

9. Un module de transport conforme à une revendication précédente, **caractérisé en ce que** le socle (10) présente un premier bloc (20) de guidage avec des voies (25, 27) inclinées et le support (11) présente un second bloc (35) de guidage avec des voies (36, 40) inclinées et qu'une rotule (57) universelle est prévue entre l'un des blocs (35) de guidage et, selon le cas, soit le socle, soit le support (11).

10. Un module de transport conforme à une revendication précédente, **caractérisé en ce que** l'actuateur (30) fait partie du support (11) et permet de modifier la position verticale relative d'un bloc (35) de guidage, lequel présente les voies (36, 40) inclinées du support (11), par rapport à un corps (31, 32) d'étayage au sol du support (11).

11. Un module de transport conforme à une revendication précédente, **caractérisé en ce que** l'actuateur (30) est disposé de façon à coulisser dans une direction purement verticale par rapport au sol, ou alors au moins presque verticale.

12. Un module de transport conforme à une revendication précédente, **caractérisé en ce que** l'actuateur est constitué par une unité (30) piston cylindre hydraulique à double effet.

13. Un module de transport conforme à la revendication n° 12, **caractérisé en ce que** le support (11) comporte l'unité (30) piston cylindre, dont le cylindre (31) peut être posé sur le sol et dont la tige (55) de vérin fixée sur le piston (54) sort hors du cylindre (31) du côté opposé au sol, ainsi qu'un bloc (35) de guidage, au niveau duquel sont formées les voies (36, 40) inclinées du support (11) et lequel est porté par la tige de vérin, et que le socle (10) est conçu sous forme de bol, dont les bords sont rabattus sur le support (11), et présente à l'intérieur, au niveau de son fond (13), un bloc (20) de guidage avec les voies (25, 27) inclinées du socle (10).

14. Un module de transport conforme à une revendication précédente, **caractérisé en ce que** le socle (10) présente un premier bloc (20) de guidage muni des voies (25, 27) inclinées du socle (10) et d'un corps (12, 13) d'étayage au sol, que le support (11) présente un second bloc (35) de guidage muni des voies (36, 40) inclinées du support (11), et que les deux blocs (20, 35) de guidage peuvent être amenés à effectuer une rotation commune, autour d'un axe (24) vertical, par rapport au corps (12, 13) d'étayage au sol du socle (10).

15. Un module de transport conforme à la revendication n° 14, **caractérisé en ce que** les deux blocs (20, 35) de guidage peuvent être amenés à effectuer une rotation dans une plage angulaire d'au moins 270 degrés par rapport au corps (12, 13) d'étayage au sol du socle (10).

16. Un module de transport conforme à la revendication n° 14 ou n° 15, **caractérisé en ce que** un moteur (73), en particulier un moteur hydraulique, est disposé au niveau du socle (10) pour effectuer la rotation des blocs (20, 35) de guidage.

17. Un module de transport conforme à une revendication précédente, **caractérisé en ce que** le socle (10) présente un premier bloc (20) de guidage avec des voies (25, 27) inclinées et le support (11) présente un second bloc (35) de guidage avec des voies (36, 40) inclinées, qu'il existe un jeu latéral entre les deux blocs (20, 35) de guidage, et que des moyens (45) de centrage sont disponibles pour centrer les deux blocs (20, 35) de guidage l'un par rapport à l'autre, dans une position centrale.

18. Un module de transport conforme à la revendication n° 17, **caractérisé en ce que** les moyens de centrage comportent un dispositif (45) de centrage doté d'au moins un ressort (47), lequel peut prendre appui contre l'un des blocs (35) de guidage, et d'au moins un appui (46) de ressort, lequel peut être repoussé par le ressort (47) contre l'autre bloc (20) de guidage, dans toute position relative des deux blocs (20, 35) de guidage l'un par rapport à l'autre dans la direction du guidage.

19. Un module de transport conforme à la revendication n° 18, **caractérisé en ce que** les moyens de centrage comportent un dispositif (45) de centrage, doté d'un ressort (47) disposé au niveau du bloc (35) de guidage, et de deux appuis (46) de ressort, lesquels sont guidés au niveau du bloc (35) de guidage perpendiculairement à la direction du déplacement des deux blocs (20, 35) de guidage, entre lesquels le ressort (47) est comprimé et lesquels sont repoussés par le ressort (47) vers l'extérieur, dans le sens de l'autre bloc (20) de guidage, et que la course vers l'extérieur de chaque appui (46) de ressort est limitée par une butée (52) au niveau de l'un des blocs (35) de guidage de façon à ce que, dans la position centrale des deux blocs (20, 35) de guidage l'un par rapport à l'autre, un appui (46) de ressort ne soit disposé qu'à une faible distance de la butée ou de l'autre bloc (20) de guidage.

20. Un module de transport conforme à la revendication n° 18 ou n° 19, **caractérisé en ce que** les moyens de centrage présentent deux dispositifs (45) de centrage, lesquels sont solidaires dans leur mouvement d'un bloc (35) de guidage et lesquels sont distants l'un de l'autre dans la direction du déplacement des deux blocs (20, 35) de guidage.

21. Un module de transport conforme à une revendication précédente, **caractérisé en ce que** le support (11) présente une articulation pivotante dotée d'un axe vertical et qu'un bloc (35) de guidage doté des voies (36, 40) inclinées du support (11) peut être amené à effectuer un mouvement de rotation, autour de l'axe vertical de l'articulation pivotante, par rapport à un corps (31, 32) d'étayage au sol du support (11).

22. Un module de transport conforme à une revendication précédente, **caractérisé en ce que** le mouvement relatif entre le socle (10) et le support (11) dans la direction du déplacement peut être saisi à l'aide d'un capteur (60) de déplacement.

23. Un module de transport conforme à la revendication n° 22, **caractérisé en ce que** le socle (10) présente un premier bloc (20) de guidage avec une première surface (25) formant un coin et le support (11) présente un second bloc (35) de guidage avec une seconde surface (36) formant un coin et qu'une partie (61, 63) du capteur (60) de déplacement est insérée dans une ouverture (62) dans une surface (25, 36) formant un coin sur un bloc (20, 35) de guidage.

24. Un module de transport conforme à une revendication précédente, **caractérisé en ce que** un élément (90) porteur du socle (10), qui présente une surface (92) permettant de supporter la charge, est réglable en termes de position verticale.

25. Un module de transport conforme à la revendication n° 24, **caractérisé en ce que** l'élément (90) porteur est réglable en termes de position verticale à l'aide d'un vérin (82) de levage hydraulique.

26. Un module de transport conforme à une revendication précédente, **caractérisé en ce que** un élément (90) porteur du socle (10), qui présente une surface (92) permettant de supporter la charge, peut être basculé de tous les côtés.
